# EUROPEAN PATENT SPECIFICATION

(11) **EP 2 646 900 B1**
(45) Date of publication and mention of the grant of the patent: **29.11.2017**
(21) Application number: 11808276.7
(22) Date of filing: 29.11.2011
(51) Int. Cl.: G06F 3/16, A61J 7/04, G04G 13/02, G08B 21/24, G04G 13/00, G11B 33/06, G09B 5/06

(54) **A MEMORY AID DEVICE**
VORRICHTUNG FÜR GEDÄCHTNISHILFE
DISPOSITIF POUR AIDER LA MÉMOIRE

(30) Priority: 29.11.2010 GB 201020138
(43) Date of publication of application: 09.10.2013
(73) Proprietor: Sentience Software Ltd, Hampshire PO12 1BS (GB)
(72) Inventor: HARVEY, Delroy, London E6 5YT (GB)
(74) Representative: Adamson Jones
(86) International application number: PCT/GB2011/052354
(87) International publication number: WO 2012/073015

(56) References cited:
- EP-A2- 1 320 025
- US-A1- 2009 033 472
- US-A1- 2009 059 729
- US-A1- 2009 171 486

## Description

This invention relates to memory aid devices, and in particular to memory aid devices that involve the playing of audible messages for the user.

Devices for aiding memory are desirable for a wide range of different people, but particularly for the elderly, and those suffering from dementia, such as Alzheimer's disease. The present invention relates to an area of cognitive research known as Prospective Memory, or memory of future plans and action, and is quite different from memory research known as Retrospective Memory, which relates to memory of past facts and other information learned (e.g. how to tie shoelaces, add 2+2 together or knowing that Madrid is the capital of Spain, etc).

Prospective Memory research over the last 40 years has shown that people generally cope well with remembering 'important' intentions, such as a doctor's or bank manager's appointment. However, they cope less well with remembering less important things to do (tasks), such as remembering to post a letter (at the intended time) tucked in an inside pocket or briefcase, that do not stand out or that get crowded out by more pressing demands that soak up immediate attention (observing a road accident or altercation as you walk past the post box, or remembering to put the rubbish out on collection day etc).

A range of different devices have been devised in an attempt to aid memory. One type of device involves the recording, and playback, of audible messages at pre-determined times, in order to remind the user to perform a particular task at a particular time. However, none of these current devices is entirely satisfactory. In particular, the user may not be in a position to complete the task at the pre-determined time, or the user may like to know before the pre-determined time what tasks have been set. US 2009/171486 and EP 1 320 025 each disclose examples of reminder devices by which a plurality voice recordings can be stored and replayed using buttons.

There has now been devised an improved memory aid device which overcomes or substantially mitigates the above-mentioned and/or other disadvantages associated with the prior art.

According to a first aspect of the invention, there is provided a device for aiding the memory of a user, said device comprising a series of actuators, which are independently actuatable by said user, and means for recording and storing a plurality of audible messages created by said user and assigning each of said audible messages to one of said actuators, wherein each of said audible messages is playable by actuation of the actuator to which it is assigned, and the series of said actuators is arranged in an ordered sequence, the order being identifiable to the user by the physical arrangement of said actuators and visual indications associated with said actuators, and characterised in that said device further comprises means for assigning scheduled playback times to said audible messages, and said device is adapted to assign each of said audible messages to its actuator based on one or more rules such that said audible messages are ordered with respect to said ordered sequence of the series of actuators in an order according to said scheduled playback times, said device being adapted to play back the audible messages at the corresponding scheduled playback times.

The device according to the invention is advantageous principally because the user, or a carer, is able to create a plurality of audible messages, each audible message being playable by actuation of the actuator to which it is assigned. This provides a simple device for aiding memory, which enables audible messages to be recalled by simply actuating the actuators of the device. The device according to the invention is therefore particularly advantageous for the elderly, and those suffering from dementia, such as Alzheimer's disease.

The number of actuators is preferably of a sufficient number that the user can record a reasonable number of audible messages, for example relating to tasks for a particular day, but not so great that the number of audible messages is unmanageable. In presently preferred embodiments, the number of actuators is between 5 and 20, and most preferably between 8 and 12.

Each actuator may include a numerical or alphabetical indicator, such that the series of actuators include a numerical or alphabetical sequence, eg 1, 2, 3, 4, etc. The ordering of the actuators is particularly advantageous because it enables the audible messages to be assigned a priority, which is indicated to the user by the position of the audible message in the series of actuators.

The means for enabling a plurality of audible messages to be created may comprise a keyboard, for generating an audible message comprising a device-generated voice. However, in presently preferred embodiments, the device is adapted to enable each audible message to be created by recording the voice of the user or another person, such as a carer. The device preferably therefore includes a microphone for receiving a voice, and means for storing the recording in an electronic format.

Each actuator preferably has only one audible message assigned to it, although in certain instances it may be desirable to have a series of audible messages that inform the user of steps in a task, rather than the task only, as discussed in more detail below. Each audible message is preferably separate from the other audible messages stored in the device, such that the audible messages may be reordered, during use, as discussed in more detail below. In particular, the device preferably includes a series of virtual memory slots, which are assigned to the series of actuators. Hence, each audible message is preferably stored in a virtual memory slot, which is assigned to a particular actuator of the device.

The assigning of each audible message to one of the actuators may be achieved by the user selecting the actuator to which the audible message is assigned, which will generally involve the user selecting an actuator that does not already have an audible message assigned to it. The device is preferably adapted to re-assign the audible message to a different actuator to that selected by the user, based on one or more rules.

The device is preferably adapted to assign audible messages to the series of actuators, such that the audible messages are assigned in sequence from one end of the user-identifiable order of the actuators, for example from the beginning of the numerical or alphabetical sequence associated with the actuators. The audible messages may therefore be assigned to a continuous sequence of actuators at one end of the user-identifiable order of the actuators, with the remaining actuators that do not have an audible message assigned to them forming a continuous sequence of actuators at the other end of the user-identifiable order of the actuators. This feature is particularly advantageous because it provides the user with a readily identifiable "list" of audible messages, which the user can playback in sequence.

The device may be adapted to order the audible massages with respect to the series of actuators depending upon the time at which the audible message was created. However, in presently preferred embodiments, the device is adapted to automatically order the audible messages based on a priority indication that is assigned by the user. In particular, the audible messages may be assigned a priority value, such as a ranking, or, most preferably, the audible messages are assigned scheduled playback times. The assigning of scheduled playback times to the audible messages is discussed in more detail below. In presently preferred embodiments, each audible message is assigned a scheduled playback time, which includes an immediate playback, and the audible massages are ordered with respect to the series of actuators in order of scheduled playback times.

The scheduled playback time is most preferably determined by the user. The scheduled playback time of an audible message is preferably the time of the current day, or possibly a date and time in some embodiments, at which the audible message will be played back. The device preferably, therefore, includes a clock, and most preferably a real-time clock, to enable this scheduling. This clock may be internal only, but is preferably displayed to the user.

The audible message playback is preferably at a sufficient volume for the user to hear the audible message, and the volume is preferably set by the user depending upon the circumstances. Where there will also be an earlier playback of the audible message, for example as part of a reminder system, as discussed in more detail below, the device preferably provides an indication to the user that the playback is at the scheduled playback time. This indication may be a spoken message, such as "DO THIS NOW", that is delivered by a device-generated voice, or that is a pre-recorded message of the user.

The device is preferably adapted to repeat the audible message following an initial playback at the scheduled playback time, until the user indicates that the audible message may be deleted, for example because the associated task has been completed, or the user reschedules the playback time for that audible message, as discussed in more detail below. In particular, the device is preferably adapted to repeat the audible message either immediately following each playback, or at pre-determined intervals following the initial playback. The device may include a facility to mute the device. However, in this arrangement, the device preferably resumes repeated playback of the audible message, once the mute has been removed, until the user indicates that the audible message may be deleted, or the user reschedules the playback time for that audible message.

The audible message assigned to the first actuator in the series will typically be the only audible message that will be played. In particular, once the audible message assigned to the first actuator is played at its scheduled playback time, it will typically be deleted or rescheduled, and the audible message having the next scheduled playback time will replace it, and will become assigned to the first actuator in the series. However, it is possible, where the scheduled playback times of several audible messages are the same, or close together, that more than one audible message will be playing at, or following, its scheduled playback time, simultaneously. The device is preferably adapted, in these circumstances, to ensure that the playback of the audible messages is interlaced. In addition, the device is preferably adapted to play audible messages assigned to a particular number, eg 3, of the actuators at the beginning of the series.

In addition to the device preferably enabling one or more of the audible messages, and most preferably each audible message, to be assigned a scheduled playback time, the device is preferably adapted to play back audible messages at one or more times before the scheduled playback time, as part of a reminder system. These reminder playbacks may be scheduled by the user in any one of a variety of ways, for example the device may enable a user to determine an interval at which the reminder playbacks will be played back until the scheduled playback time. Alternatively, the device may enable a user to determine the number of reminder playbacks before the scheduled playback time, to be scheduled at regular intervals between the current time and the scheduled playback time. A further alternative is that the device may enable a user to schedule the one or more reminder playbacks for a specified time, or specified times, before the scheduled playback.

The scheduled playbacks and reminder playbacks are preferably set to be on the day on which the audible message(s) are created, by default. However, the device preferably also includes the facility to set scheduled playbacks and reminder playbacks for the day after the day on which the audible message(s) are created, ie tomorrow.

The device is preferably adapted to play audible messages assigned to a particular number, eg 3, of the actuators at the beginning of the series, ie the "high priority range". This is advantageous because it ensures that the user is only reminded of the highest priority tasks at any one time. Hence, where reminder playbacks have been set for one or more audible messages, the device is preferably adapted to play the audible messages at the scheduled reminder times, only where those audible messages are assigned to one of the actuators in the "high priority range".

The reminder playback may constitute a simple play back of the audible message. As discussed above, the reminder playbacks and the scheduled playback are preferably distinguished by an indication to the user, for example by playing a spoken message, such as "DO THIS NOW", along with the scheduled playback.

As mentioned above, the device preferably enables a user to reschedule the playback time for an audible message, for example while the audible message is being repeated following the previously scheduled playback. This may be achieved by the device simply enabling the user to enter a new scheduled playback time. Where the audible massages are ordered with respect to the series of actuators in order of scheduled playback times, the device preferably re-orders the audible messages accordingly, once an audible message has been rescheduled.

Alternatively, the device may be adapted to enable a user to simply indicate the desired new position of the audible message, with respect to the series of actuators, such that the device automatically assigns a new scheduled playback time appropriate to the new position. In particular, the device is preferably adapted to assign a new scheduled playback time that is between, and most preferably approximately midway between, the two scheduled playback times assigned to the audible messages of the two actuators adjacent to the new position. As discussed above, the device preferably re-orders the audible messages accordingly, once an audible message has been rescheduled.

Where the device has a touch-screen display and input interface, as discussed in more detail below, this rescheduling may be conveniently achieved using a "drag-and-drop" feature of the touch-screen device. In particular, the device preferably enables a user to "drag-and-drop" the actuator to which the audible message is currently assigned to a new position between two actuators in the sequence of actuators shown on the touch-screen display. This is done by the user applying mild pressure to the actuator, moving that applied pressure across the surface of the touch-screen display to a location between two actuators, and then removing the applied pressure. The device preferably then re-orders the audible messages accordingly, with respect to the series of actuators.

As mentioned above, in certain instances, it may be desirable for the device to store a series of audible messages that inform the user of steps in a task, rather than the task only. In particular, the complete series of audible messages may be assigned to one of the actuators, and may have a scheduled playback time, as discussed above in relation to single audible messages. Alternatively, or in addition, the device may be adapted to play back the series of audible messages immediately, or after a pre-determined delay, following creation. This feature may enables a carer to record a series of audible messages that inform the user of the steps needed to be performed to complete a particular task. This is particularly advantageous for clinically 'intention-memory' impaired people, who may still able to perform a practical task with prompts (e.g. cook a meal), but tend forget to do some of the steps needed in the task or do them in the wrong order. For example, to make a fried egg sandwich, a carer could input the following audible messages into the device: [1] put a frying pan on cooker, [2] pour cooking oil into the pan, [3] turn the cooker on, [4] watch the egg being fried, [5] when the egg is cooked, turn the cooker off, [6] get two slices bread, [7] butter the bread slices, [8] put the egg in between the bread slices. The audible messages are preferably played in order, at regular intervals, but the device preferably enables the playback to be paused while a step of the task is performed, and restarted once that step has been completed.

The device may also have the facility to activate an interruption mode, for example by pressing an actuator on the device, which enables a user to record an audible message that informs the user of the next step in an interrupted task. The device may be adapted to play back the audible message on demand by the user, for example when the interruption has been removed, or most preferably to repeat the audible message continuously until cancellation by the user, for example when the interruption has been removed.

The device may also have the facility to store one or more audible messages, or one or more series of audible messages, in a memory, which enables them to be reactivated as desired. This feature would remove the need to keep recording audible messages that relate to regular tasks, eg daily tasks. Most preferably, the device is adapted to store audible messages relating to a number of regular tasks, with the user able to selectively reactivate those audible messages as desired.

The actuators of the device preferably have the form of buttons, which are actuatable by applying pressure. The buttons may be mechanical buttons that are moved relative to a mounting, or may be actuated by the presence of the user's finger or thumb, for example using electromagnetic effects. The manual play back of an audible message is preferably achieved by the user pressing the button to which the audible message has been assigned, or alternatively by pressing and holding that button for a pre-determined period of time.

The device may be a dedicated electronic device, and is preferably portable and most preferably hand-held. The device preferably has a display for communicating information to the user, and preferably includes means for the user to input control instructions to the device, in addition to the actuators (eg buttons) to which audible messages are assigned. These input means may be buttons, switches, or any other suitable user interface. Indeed, the device may include a touch-screen, which is preferably adapted to display information to the user, and preferably adapted to define a user interface adapted to receive control instructions from the user. The actuators to which audible messages are assigned may be defined by the touch-screen display, for example by graphical buttons or icons.

The present invention may, for certain categories of users, be particularly suitable for implementation on a touch-screen phone, such as an iPhone®. In these embodiments, the device may be implemented by a computer program loaded onto the touch-screen phone.

Hence, according to a further aspect of the invention, there is provided a computer program stored on a computer readable carrier, the computer program being adapted to be loaded onto an electronic device, such that the device is in accordance with the first aspect of the invention. The electronic device is preferably a phone, and most preferably a touch-screen phone.

The device preferably also includes means for instructing the user in relation to the next step in any procedure related to the device, such as recording an audible message. These instructions may be visual and/or audible system messages. In particular, the device is preferably adapted to enable a user to choose between the system messages being visual or audible messages.

Preferred embodiments of the invention will now be described in greater detail, by way of illustration only, with reference to the accompanying drawings, in which
Figure 1 is a front view of a first embodiment of a device according to the invention;
Figure 2 illustrates the manual playback process of the first embodiment;
Figure 3 illustrates the steps of the recording process of the first embodiment;
Figure 4 illustrates the steps of the automated reminder process of the first embodiment;
Figure 5 illustrates the steps of the automated playback process of the first embodiment; and
Figure 6 is a perspective view of a second embodiment of a device according to the invention.

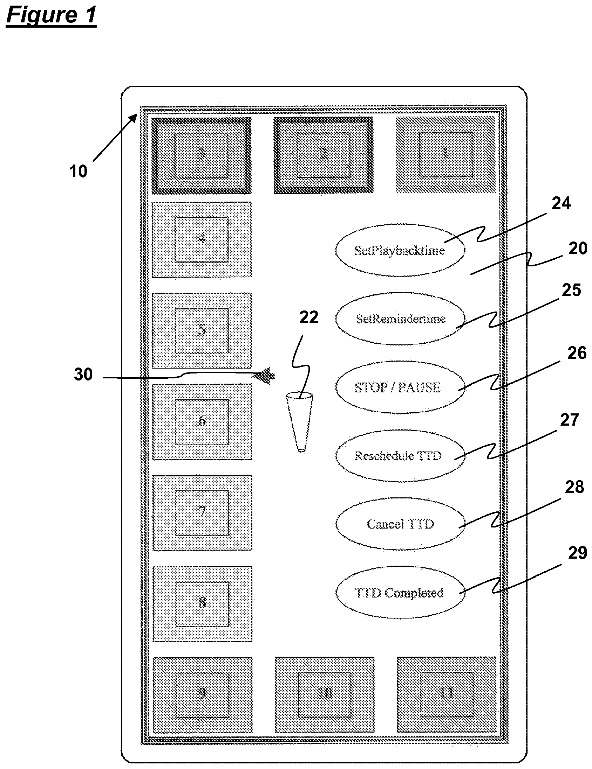

Figure 1 shows a first embodiment of a device according to the invention, which is generally designated 10. The first embodiment 10 has the form of a touch-screen phone, and in particular is implemented by a computer program running on a touch-screen phone, such as an iPhone®.

The device 10 comprises a touch-screen display 20, which is adapted to display a number of icons that are actuatable by the user. In particular, a user applying mild pressure to one of the displayed icons actuates the function associated with that icon. The device is also adapted to receive so-called "drag-and-drop" instructions from the user, by the user applying mild pressure to an icon, and moving that applied pressure across the surface of the screen to a desired location. The device is adapted to perform a function from these drag-and-drop instructions involving the icon originally selected, and the area of the screen from which pressure was transferred and ultimately removed. The application of these features of the device 10 will be discussed in more detail below.

The device 10 displays eleven numbered icons, which represent virtual memory slots of the device. Each icon consists of a simple rectangle, which is approximately the size of an adult's fingerprint, with a number displayed in the centre of the rectangle. These eleven memory slots are displayed in number sequence from the top-right-hand corner of the display 20, anti-clockwise around the periphery of the display 20, to the bottom-right-hand corner of the display 20 (viewed in an upright orientation, as shown in Figure 1). In particular, memory slots 1, 2 and 3 are arranged in reverse order along the upper edge of the display 20, memory slots 9, 10 and 11 are arranged in order along the lower edge of the display 20, and intervening memory slots 4, 5, 6, 7 and 8 are arranged in order down the left-side edge of the display 20.

In addition to the memory slots, the device 10 also displays a microphone icon 22, and six other control icons 24,25,26,27,28,29. The control icons 24,25,26, 27,28,29 are a "set playback time" icon 24, a "set reminder time" icon 25, a "STOP/PAUSE" icon 26, a "reschedule TTD" icon 27, a "cancel TTD" icon 28 and a "TTD completed" icon 29. The functionality associated with each of these control icons will be discussed in more detail below. Please note, however, that "TTD" refers to a "thing to do", and corresponds to a task that the device is adapted to reminder the user about.

The device 10 is adapted to enable a user to record up to eleven voice messages, with each voice message being assigned to a virtual memory slot, as discussed in more detail below. Each voice message is intended to inform the user of a "thing to do" or a task that the user would like to complete. The voice message that is recorded is preferably therefore a relatively simple instruction, such as "post letter to sister".

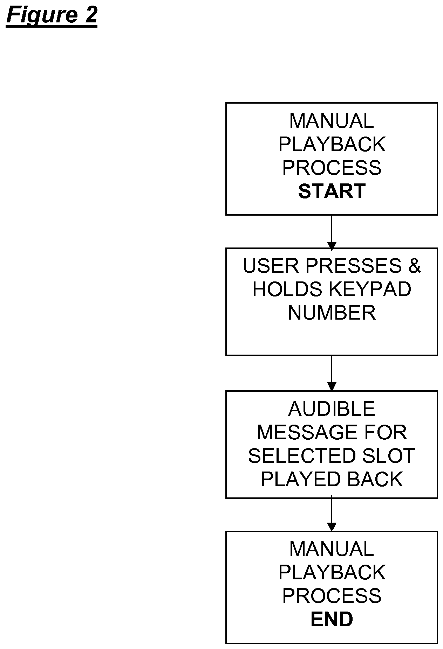

Each memory slot is adapted to have a single voice message assigned to it. In addition, a user may manually play back a voice message by pressing and holding the memory slot to which that voice message has been assigned. This process is illustrated in Figure 2.

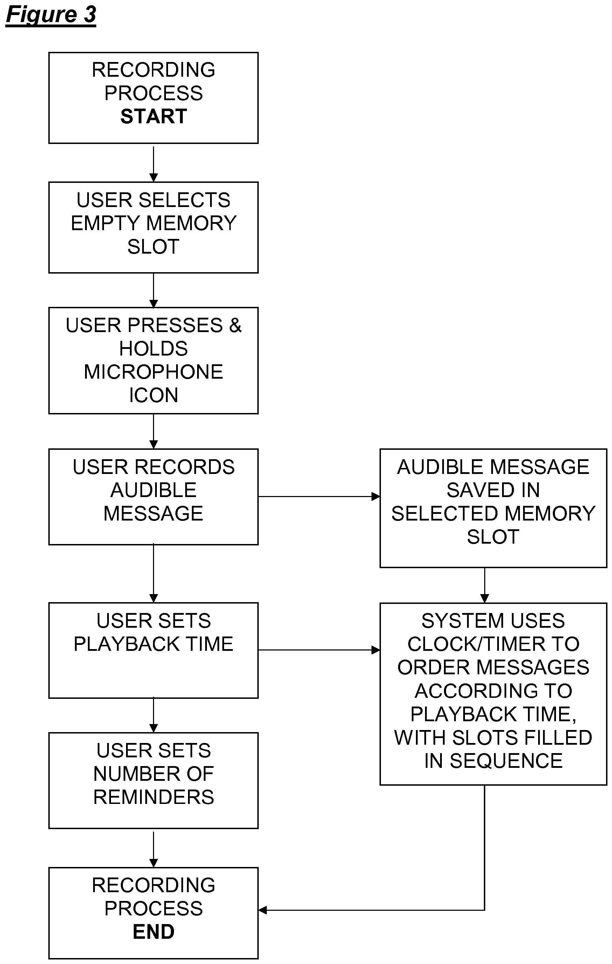

The process for recording a voice message is illustrated in Figure 3. In this embodiment, before a new voice message can be recorded, the user must select a memory slot that does not have a voice message assigned to it. This is typically done by the user manually playing back the voice messages of individual memory slots, for example in sequence, until an empty memory slot is identified and selected. This process has the added benefit of reminding the user of the voice messages currently stored by the device 10.

When an empty memory slot has been selected, the user presses and holds the microphone icon 22 while speaking the voice message. When the user has finished speaking, the user releases the microphone icon 22 to finish recording. The device 10 preliminarily assigns the recorded voice message to the selected memory slot.

The device 10 also requires the user to assign a particular playback time to each voice message, which will generally be the time at which the task must be done, or the time that it would be most convenient to do a task. In association with the playback time, the device also enables the user to determine whether, and how many, reminders should be played leading up to the playback time. For example, the user may be able to specify the number of reminders that will be played between the time of recording and the scheduled playback time, at regular intervals.

In this embodiment, once a voice message has been recorded, the user presses the "set playback time" icon 24, and then enters a time of day using appropriate input means on the touch-screen display, such as a keypad. Once a playback time has been set for a particular voice message, the device 10 re-assigns the stored voice messages to the memory slots, in order of time, in numerical sequence from memory slot 1. This is achieved using an internal clock of the device 10. This re-assignment of voice messages to the memory slots causes the voice message having the earliest playback time to be assigned to memory slot 1, the voice message having the next earliest playback time to be assigned to memory slot 2, and so on.

If it is desired to also provide reminders of a particular task in advance of the playback time, the user also presses the "set reminder time" icon 25, in order to input the number of reminders that will be played before the playback time. Alternatively, the recording process may be completed by pressing the "STOP/PAUSE" icon 26, for example where the user does not require reminders for a particular voice message.

In use, the user may manually play back the stored voice messages by pressing and holding each memory slot to which a voice message has been assigned. This process is illustrated in Figure 2. In addition, the device 10 is adapted to play back each voice message at each scheduled reminder time, and again at the scheduled playback time, when the voice message will be preceded by the audible message "DO THIS TASK NOW".

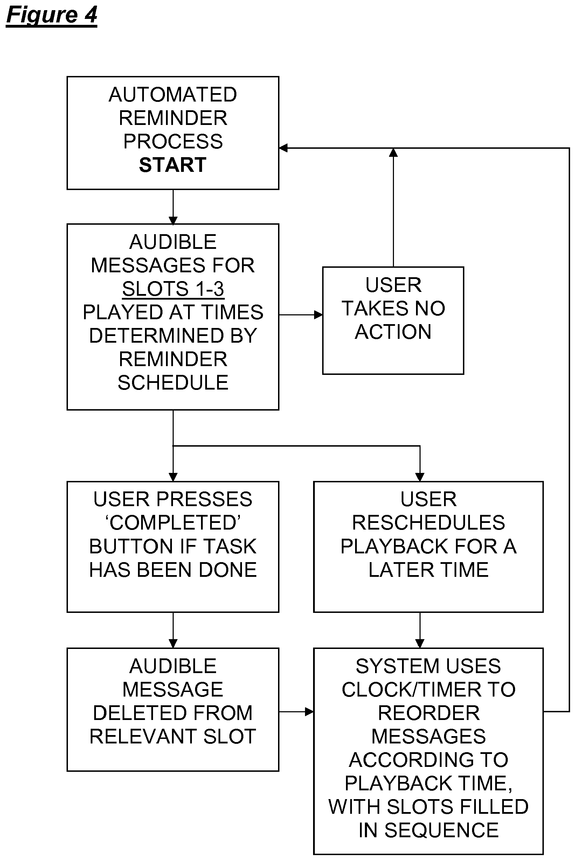

The automated reminder process is illustrated in Figure 4. In particular, the device 10 is adapted to play back the voice messages assigned to memory slots 1-3, at a time determined by the reminder schedule. No reminders are played for the voice messages assigned to memory slots 4-11. There is no need for the user to take any action when a reminder playback occurs. If the user takes no action, the device will simply continue to play back the voice messages assigned to memory slots 1-3 at the times scheduled by the reminder schedule.

If a reminder relates to a task that the user has completed, the user presses the "TTD completed" icon 29. This action causes the associated voice message to be deleted from the device 10. The device 10 then re-assigns the stored voice messages to the memory slots, in order of time, in numerical sequence from memory slot 1, as discussed above in relation to setting the playback time. A voice message that was previously assigned to one of memory slots 4-11 will therefore be promoted to memory slots 1-3, and hence reminder playbacks will commence for that voice message according to its reminder schedule.

Alternatively, if a reminder relates to a task that the user wishes to reschedule, the user presses the "reschedule TTD" icon 27. This enables the user to input a new playback time, in the same manner in which the original playback time was input. Once a new playback time has been entered, the device 10 then re-assigns the stored voice messages to the memory slots, in order of time, in numerical sequence from memory slot 1, as discussed above in relation to setting the playback time and completing a task. Where the rescheduled voice message was previously assigned to one of memory slots 1-3, the voice message may be demoted by the rescheduling to one of memory slots 4-11, and hence reminder playbacks may cease for that voice message, until it is once again promoted to one of memory slots 1-3. In this case, a voice message that was previously assigned to one of memory slots 4-11 would therefore be promoted to memory slots 1-3, and hence reminder playbacks would commence for that voice message according to its reminder schedule.

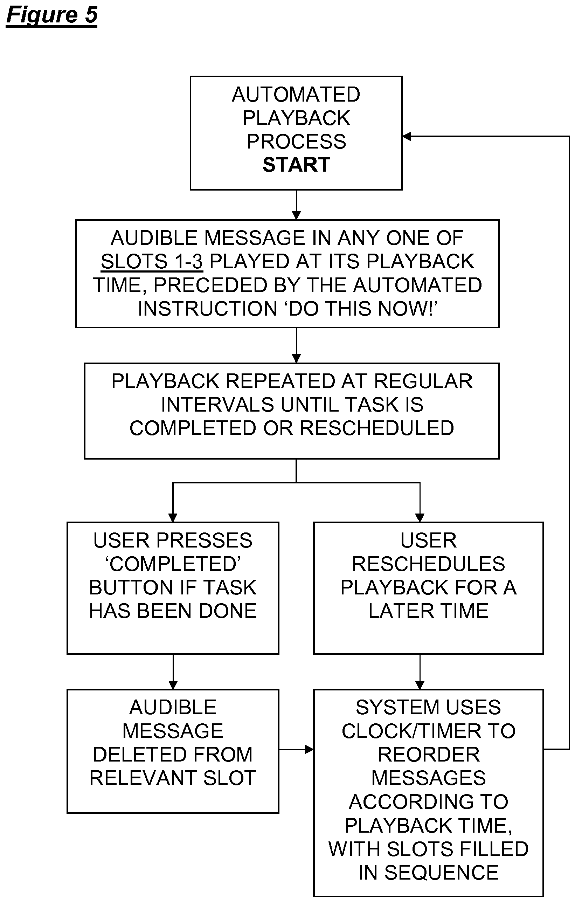

The automated playback process is illustrated in Figure 5. In particular, the device 10 is adapted to play back the voice messages assigned to memory slots 1-3, at its scheduled playback time, with the preceding audible message "DO THIS TASK NOW". The voice message playback and the preceding audible message are then repeated until the device 10 received further input from the user.

The user may silence the device 10 for a pre-determined period whilst the task is being carried out, by pressing the "STOP/PAUSE" icon 26. However, the voice message playback and the preceding audible message will be repeated until the user presses either the "reschedule TTD" icon 27 or the "TTD completed" icon 29.

In particular, once a task to which the playback relates has been completed, the user presses the "TTD completed" icon 29. This action causes the associated voice message to be deleted from the device 10. The device 10 then re-assigns the stored voice messages to the memory slots, in order of time, in numerical sequence from memory slot 1, as discussed above. A voice message that was previously assigned to one of memory slots 4-11 will therefore be promoted to memory slots 1-3, and hence reminder playbacks will commence for that voice message according to its reminder schedule.

Alternatively, if the playback relates to a task that the user wishes to reschedule, the user presses the "reschedule TTD" icon 27. This enables the user to input a new playback time, in the same manner in which the original playback time was input. Once a new playback time has been entered, the device 10 then re-assigns the stored voice messages to the memory slots, in order of time, in numerical sequence from memory slot 1, as discussed above. Where the rescheduled voice message was previously assigned to one of memory slots 1-3, the voice message may be demoted by the rescheduling to one of memory slots 4-11, and hence reminder playbacks may cease for that voice message, until it is once again promoted to one of memory slots 1-3. In this case, a voice message that was previously assigned to one of memory slots 4-11 would therefore be promoted to memory slots 1-3, and hence reminder playbacks would commence for that voice message according to its reminder schedule.

In order to improve usability, the device 10 includes visual and/or audible instructions for what to do next, for example "speak now", "now set playback time", "now set reminder time", etc, or information about what has been done, for example "message recorded", "memory slot empty", etc.

In addition, although the user may reschedule a task by pressing the "reschedule TTD" icon 27, and inputting a new playback time, the device 10 also enables a user to reschedule the playback time of a voice message by the user inputting a new position for the voice message in the sequence of memory slots. In particular, the device 10 enables a user to "drag-and-drop" the memory slot icon to which the voice message is currently assigned to a new position between two memory slots in the sequence of memory slots shown on the display 20. This is done by the user applying mild pressure to the memory slot icon, moving that applied pressure across the surface of the display 20 to a location between two memory slot icons, and then removing the applied pressure.

The device 10 is adapted to automatically set a playback time to a voice message that is rescheduled using this "drag-and-drop" procedure. In particular, the device assigns a playback time that is midway between the playback times of the voice messages assigned to the adjacent memory slots. Once the device has set the playback time, the device 10 then re-assigns the stored voice messages to the memory slots, in order of time, in numerical sequence from memory slot 1, as discussed above.

The device also includes a facility to cancel out-dated voice messages, for example voice messages relating to tasks that have not been completed, but are no longer relevant, for example responsibility has been transferred to somebody else. In particular, a voice message may be deleted during playback by pressing and holding the "cancel TTD" icon 28 for several seconds. Alternatively, a user may delete a voice message at any other time by selecting the memory slot to which the voice message has been assigned, and pressing and holding the "cancel TTD" icon 28 for several seconds.

Although this embodiment is implemented using a touch-screen phone, the memory slot icons act as simulated actuators. In particular, the memory slot icons provide kinetic feedback by vibrating when pressed, and there is visual and audio feedback that simulates the experience of pressing a real actuator.

Figure 1 shows an arrow 30 on the display, which indicates where a new or rescheduled voice message is being located (although the arrow would disappear when the device functions completes any re-ordering.

The device 10 is also adapted to function with additional microphones, if desired, and the device 10 enables a variety of preferences to be set by the user, including the appearance of the display, the extent of the actuator simulations, and options relating to the device "voice" used to provide audible system messages.

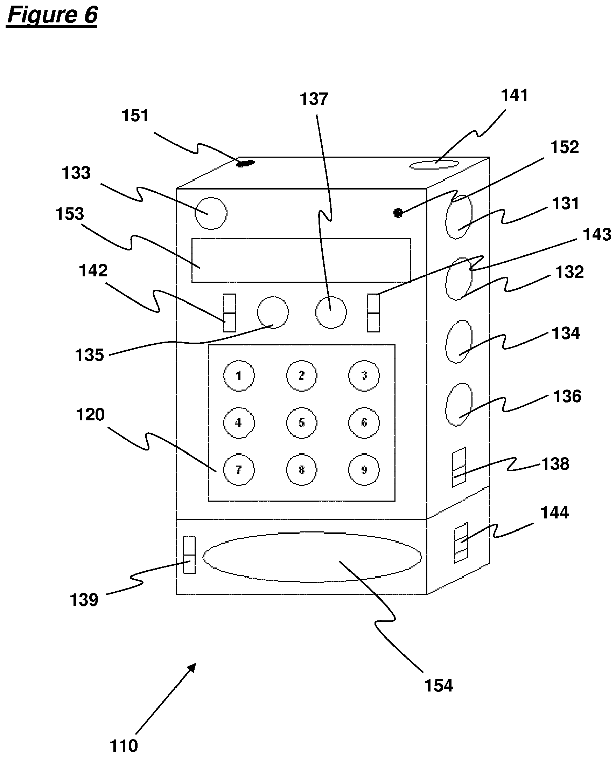

Figure 6 shows a second embodiment of a device according to the invention, which is generally designated 110. The second embodiment 110 has the form of an electronic device, which is specifically adapted to function as a memory aid device. This embodiment is intended for use by the elderly and those suffering from dementia, such as Alzheimer's disease.

The second embodiment 110 is adapted to function in a very similar manner to the first embodiment 10. However, the device 110 itself is clearly rather different. Firstly, the memory slot icons of the first embodiment 10 are replaced by nine memory slot actuators, which are numbered from 1 to 9 and arranged in the form of a keypad 120, on the front of the device 110. The device 110 therefore has nine memory slots, compared to the eleven memory slots of the first embodiment 10.

The device 110 also includes the following push actuators: a record actuator 131, an interruption actuator 132, an end actuator 133, a priority intention actuator 134, a task actuator 135, and a stop actuator 136. In particular, the record actuator 131, the interruption actuator 132, the priority intention actuator 134, and the stop actuator 136, are arranged in a row down a side face of the device 10, and the end actuator 133 and the task actuator 135 are arranged on the front face of the device 110.

The device 110 also includes an on/off switch 141, a select mode switch 142, a timer switch 143 and a volume switch 144, as well as a microphone jack 151, an earpiece jack 152, an LCD screen 153, and a speaker 154. The speaker 154 and the volume switch 144 are disposed on the front and side faces, respectively, of a lower part of the device (as shown in Figure 6). The select mode switch 142 and the timer switch 143 are disposed above the keypad 120 on the front face of the device 110, and the LCD screen 153 is disposed above those switches 142,143, extending across an upper part of the device 110. At the upper end of the device 110 are located the on/off switch 141, the microphone jack 151 and the earpiece jack 152.

The function of the device 110 is determined by the mode that is selected using the select mode switch 142. In particular, the device has a "HERE & NOW" mode, and a "MANUAL" mode.

The "HERE & NOW" mode is intended to playback recorded voice messages either immediately, or after a short delay, following recording.

The "HERE & NOW" mode has a "task" function, which enables a carer to record a series of voice messages that inform the user of the steps needed to be performed to complete a particular task. This is particularly advantageous for clinically 'intention-memory' impaired people, who may still able to perform a practical task with prompts (e.g. cook a meal), but tend forget to do some of the steps needed in the task or do them in the wrong order. For example, to make a fried egg sandwich, a carer could input the following voice messages into the device: [1] put a frying pan on cooker, [2] pour cooking oil into the pan, [3] turn the cooker on, [4] watch the egg being fried, [5] when the egg is cooked, turn the cooker off, [6] get two slices bread, [7] butter the bread slices, [8] put the egg in between the bread slices. The voice messages are played in order, at regular intervals, but the user has the facility to pause the playback while a task is performed.

In this mode, the voice messages are recorded by firstly selecting select the "HERE & NOW" mode using the select mode switch 142. The user then presses the task actuator 135 on the front of device 110, then simply presses the record actuator 131. The user holds the record actuator 131 while speaking a first voice message into the microphone, and then releases the record actuator 131 when the voice message is recorded. The user then presses and holds the record actuator 131 to record the next voice message in the sequence, before releasing the record actuator 131 when that voice message has been recorded. This process is repeated until all of the voice messages required to perform the task have been recorded. The user then presses the stop actuator 136 on the front of the device 110.

Once this has been done, the LCD screen displays the following message: *"To playback this task automatically later select a 'free' number slot (between 2-9) once or press the orange PRIORITY INTENTION ACTUATOR once and the set the playback time",* and a system voice also speaks this message (if this option is selected, as discussed in more detail below). If the user takes no action, the device 110 will begin immediately, or after a pre-determined delay, to playback the voice messages in sequence, with a pre-determined delay between each voice message. If any of the actuators of the keypad 120 or the priority intention actuator 134 are pressed, and the user sets a playback time using the timer switch 143, the voice messages will be played back in sequence at the scheduled playback time.

The "HERE & NOW" mode also includes the facility to store up to 50 "tasks", which each consist of a series of voice messages that inform the user of the steps needed to be performed to complete a particular task, and enable any of the stored tasks to be reactivated as desired. In particular, during recording of the voice messages of a task, the task is stored by responding to a system message along the lines of *"If you want to playback this task again after today then set the STORE ROUTINE TASK button now"* by moving the relevant switch 138 to its upper position.

In order to reactivate a stored task, at a later time or date, the user moves the relevant switch 138 to the lower position, which activates a scrollable list of stored tasks on the LCD display 153, and also activates the microphone. The user then has the option to search for the task, or to speak the name of the task into the microphone, and then reactivate the task. It would then be necessary to choose how the voice messages of the task are played back, as discussed above in relation to the recording of new tasks.

The "HERE & NOW" mode also has an "interruption" function, which enables a user that has been interrupted whilst doing a particular task to record a voice message informing them of the next step in the task, which they would have done next, if they hadn't been interrupted. This voice message would then be repeated continuously, following recording, so that the user is reminded of the next step in the task when the interruption has been removed.

In this mode, the user simply presses and holds the interruption actuator 132 in the event that the user is interrupted whilst performing a task, and records an appropriate voice message while holding the interruption actuator 132. The user then presses the end actuator 133 to complete the recording process. The repeated playback then commences immediately.

The "MANUAL" mode, in contrast, enables a user or a carer to record up to nine voice messages, with each voice message being assigned to a memory slot associated with one of the actuators of the keypad 120. Each voice message is intended to inform the user of a "thing to do" or a task that the user would like to complete. The voice message that is recorded is preferably therefore a relatively simple instruction, such as "post letter to sister". In the "MANUAL" mode, the user is able to replay these voice messages by pressing the associated actuator of the keypad 120. Indeed, save for the different input arrangements of the second embodiment, the "MANUAL" mode of the second embodiment 110 functions in an essentially identical manner to the first embodiment 10.

In particular, the user manually presses one of the push actuators of the keypad 120, and then presses and holds the record actuator 131 to record a voice message that is assigned to the selected memory slot. The user then sets a playback time using the timer switch 143, and the device 110 re-assigns the stored voice messages to the memory slots, in order of time, in numerical sequence from memory slot 1, as discussed above in relation to the first embodiment 10.

It is also possible for a voice message to be played in advance of the playback time, to provide reminders of a particular task. However, this is optional in respect of each recorded voice message. If a user wishes to set reminders, the user presses one of the push actuators of the keypad 120, and then uses the timer switch 143 to set the interval of the reminders. Once the reminders have been set, the voice message is recorded and the playback time set, as described above. When the playback time of a voice message is reached, the voice message will be played back, and repeated continuously until the end actuator 133 is pressed. This voice message is then deleted, and the device 110 re-assigns the remaining voice messages to the memory slots, in order of time, in numerical sequence from memory slot 1.

A recorded voice message is assigned a playback time on the day it is recorded, by default. However, the device 110 also includes a today/tomorrow switch 139, which enables a voice message to be assigned a playback time the day following the day on which it is recorded, ie "tomorrow". In particular, the today/tomorrow switch 139 is spring-loaded into a default, "today" position. If the user briefly activates the today/tomorrow switch 139 into a "tomorrow" position, before recording a voice message, the subsequently recorded voice message will be assigned a playback time for the day after the day on which it is recorded, ie tomorrow. The device 110 will then revert back to assigning playback times on the day on which the voice message is recorded, unless the today/tomorrow switch 139 is activated once again.

It is also noted that the device includes a system message mode button 137, which enables the user to determine whether the system messages are displayed as text, or delivered by a computer or recorded system voice.

## Claims

1. A device (10; 110) for aiding the memory of a user, said device comprising a series of actuators (1-11), which are independently actuatable by said user, and
means for recording and storing a plurality of audible messages created by said user and assigning each of said audible messages to one of said actuators (1-11),
wherein each of said audible messages is playable by actuation of the actuator to which it is assigned, and
the series of said actuators (1-11) is arranged in an ordered sequence, the order being identifiable to the user by the physical arrangement of said actuators and visual indications associated with said actuators,
and **characterised in that**
said device (10; 110) further comprises means for assigning scheduled playback times to said audible messages,
and said device (10; 110) is adapted to assign each of said audible messages to its actuator based on one or more rules such that said audible messages are ordered with respect to said ordered sequence of the series of actuators (1-11) in an order according to said scheduled playback times, said device (10; 110) being adapted to play back the audible messages at the corresponding scheduled playback times.

2. A device (10; 110) as claimed Claim 1, wherein each audible message is separate from the other audible messages stored in the device, such that said audible messages may be reordered, during use.

3. A device (10; 110) as claimed in Claim 1 or 2, wherein said device (10; 110) is adapted to assign audible messages to the series of said actuators (1-11), such that the audible messages are assigned in sequence from one end of the user-identifiable order of said actuators (1-11), for example from the beginning of a numerical or alphabetical sequence associated with said actuators.

4. A device (10; 110) as claimed in any preceding claim, wherein the sequence of said actuators (1-11) to which the audible messages are assigned is a continuous sequence of said actuators (1-11) at one end of the user-identifiable order of said actuators (1-11), with the remaining actuators that do not have an audible message assigned to them forming a further continuous sequence of actuators at the other end of the user-identifiable order of said actuators (1-11).

5. A device (10; 110) as claimed in any preceding claim, wherein said device is adapted to order the audible messages based on a priority indication that is assigned by said user.

6. A device (10; 110) as claimed in Claim 1, wherein said device (10; 110) provides an indication to the user that the playback is at the scheduled playback time.

7. A device (10; 110) as claimed in any preceding claim, wherein said device is adapted to repeat the audible message following an initial playback at the scheduled playback time, until said user indicates that the audible message may be deleted, for example because the associated task has been completed, or said user reschedules the playback time for that audible message.

8. A device (10; 110) as claimed in Claim 7, including a facility to mute said device, wherein said device (10; 110) resumes repeated playback of the audible message, once the mute has been removed, until said user indicates that the audible message may be deleted, or said user reschedules the playback time for that audible message.

9. A device (10; 110) as claimed in any preceding claim, wherein said device is adapted to play back audible messages at one or more times before the scheduled playback time, as part of a reminder system.

10. A device (10; 110) as claimed in any preceding claim, wherein said device enables said user to reschedule the playback time for an audible message the device being adapted to enable said user to indicate the desired new position of the audible message, with respect to the series of said actuators (1-11), such that the device (10; 110) automatically assigns a new scheduled playback time appropriate to the new position.

11. A device (10; 110) as claimed in Claim 10, wherein said device has a touch-screen display and input interface, and the rescheduling of the playback time for at least one of said audible messages is achieved using a "drag-and-drop" feature of the touch-screen device.

12. A device (10; 110) as claimed in any preceding claim, wherein said device is adapted to order said audible messages with respect to the series of said actuators (1-11) depending upon the time at which said audible messages were created.

13. A computer program stored on a computer readable carrier, the computer program being adapted to be loaded onto an electronic device (10; 110) comprising means for recording and storing a plurality of audible messages created by said user and a series of actuators (1-11),
the computer program being operative on said device to assign each of said audible messages to an actuator in said series of actuators (1-11), said actuators being independently actuatable by said user and
the computer program being operative on said device such that each of said audible messages is playable by actuation of the actuator to which it is assigned and said series of actuators (1-11) being arranged in an ordered sequence, the order being identifiable to said user by the physical arrangement of said actuators and visual indications associated with said actuators,
**characterised in that** said audible messages are assigned scheduled playback times, and the computer program is operative on said device to assign each of said audible messages to its actuator based on one or more rules such that said audible messages are ordered with respect to said ordered sequence of said series of actuators (1-11) in an order of said scheduled playback times, said computer program being adapted to play back the audible messages at the corresponding scheduled playback times.

## Patentansprüche

1. Vorrichtung (10; 110) zum Unterstützen des Gedächtnisses eines Benutzers, wobei die Vorrichtung eine Reihe von Bedienelementen (1 bis 11) aufweist, die unabhängig voneinander von dem Benutzer betätigbar sind, und
Mittel zum Aufzeichnen und Speichern einer Mehrzahl von hörbaren Nachrichten, die von dem Benutzer erstellt wurden, und Zuweisen jeder der hörbaren Nachrichten zu einem der Bedienelemente (1 bis 11),
wobei jede der hörbaren Nachrichten durch Betätigung des Bedienelements abspielbar ist, dem sie zugewiesen ist, und
die Reihe der Bedienelemente (1 bis 11) in einer geordneten Abfolge angeordnet ist, wobei die Reihenfolge für den Benutzer durch die physische Anordnung der Bedienelemente und die den Bedienelementen zugehörigen visuellen Anzeigen identifizierbar ist, und **dadurch gekennzeichnet, dass**
die Vorrichtung (10; 110) ferner Mittel zum Zuweisen von geplanten Wiedergabezeiten zu den hörbaren Nachrichten aufweist,
und die Vorrichtung (10; 110) angepasst ist, um jede der hörbaren Nachrichten ihrem Bedienelement auf Grundlage von einer oder mehreren Regeln zuzuweisen, sodass die hörbaren Nachrichten in Bezug auf die geordnete Abfolge der Reihe von Bedienelementen (1 bis 11) in einer Reihenfolge gemäß den geplanten Wiedergabezeiten geordnet werden, wobei die Vorrichtung (10; 110) angepasst ist, um die hörbaren Nachrichten zu den entsprechenden geplanten Wiedergabezeiten abzuspielen.

2. Vorrichtung (10; 110) nach Anspruch 1, wobei jede hörbare Nachricht getrennt von den anderen hörbaren Nachrichten ist, die in der Vorrichtung gespeichert sind, sodass die hörbaren Nachrichten während einer Verwendung neu geordnet werden können.

3. Vorrichtung (10; 110) nach Anspruch 1 oder 2, wobei die Vorrichtung (10; 110) angepasst ist, um hörbare Nachrichten zu der Reihe von Bedienelementen (1 bis 11) zuzuweisen, sodass die hörbaren Nachrichten der Reihe nach von einem Ende der vom Benutzer identifizierbaren Reihenfolge der Bedienelemente (1 bis 11) aus zugewiesen werden, zum Beispiel vom Anfang einer den Bedienelementen zugehörigen numerischen oder alphabetischen Abfolge aus.

4. Vorrichtung (10; 110) nach einem der vorhergehenden Ansprüche, wobei die Abfolge der Bedienelemente (1 bis 11), denen die hörbaren Nachrichten zugewiesen sind, eine fortlaufende Abfolge der Bedienelemente (1 bis 11) an einem Ende der vom Benutzer identifizierbaren Reihenfolge der Bedienelemente (1 bis 11) ist, wobei die übrigen Bedienelemente, denen keine hörbare Nachricht zugewiesen ist, eine weitere fortlaufende Abfolge von Bedienelementen an dem anderen Ende der vom Benutzer identifizierbaren Reihenfolge der Bedienelemente (1 bis 11) bilden.

5. Vorrichtung (10; 110) nach einem der vorhergehenden Ansprüche, wobei die Vorrichtung angepasst ist, um die hörbaren Nachrichten auf Grundlage einer Prioritätsanzeige zu ordnen, die durch den Benutzer zugewiesen wird.

6. Vorrichtung (10; 110) nach Anspruch 1, wobei die Vorrichtung (10; 110) für den Benutzer eine Anzeige bereitstellt, dass die Wiedergabe zur geplanten Wiedergabezeit erfolgt.

7. Vorrichtung (10; 110) nach einem der vorhergehenden Ansprüche, wobei die Vorrichtung angepasst ist, um die hörbare Nachricht nach einer ersten Wiedergabe zur geplanten Wiedergabezeit zu wiederholen, bis der Benutzer angibt, dass die hörbare Nachricht gelöscht werden kann, weil beispielsweise die zugehörige Aufgabe abgeschlossen wurde, oder der Benutzer die Wiedergabezeit für diese hörbare Nachricht neu plant.

8. Vorrichtung (10; 110) nach Anspruch 7, die eine Einrichtung zum Stummschalten der Vorrichtung enthält, wobei die Vorrichtung (10; 110) die wiederholte Wiedergabe der hörbaren Nachricht wieder aufnimmt, wenn die Stummschaltung entfernt worden ist, bis der Benutzer angibt, dass die hörbare Nachricht gelöscht werden kann, oder der Benutzer die Wiedergabezeit für diese hörbare Nachricht neu plant.

9. Vorrichtung (10; 110) nach einem der vorhergehenden Ansprüche, wobei die Vorrichtung als Teil eines Erinnerungssystem angepasst ist, um hörbare Nachrichten einmal oder mehrmals vor der geplanten Wiedergabezeit abzuspielen.

10. Vorrichtung (10; 110) nach einem der vorhergehenden Ansprüche, wobei die Vorrichtung es dem Benutzer ermöglicht, die Wiedergabezeit für eine hörbare Nachricht neu zu planen, wobei die Vorrichtung angepasst ist, es dem Benutzer zu ermöglichen, die gewünschte neue Position der hörbaren Nachricht in Bezug auf die Reihe der Bedienelemente (1 bis11) anzugeben, sodass die Vorrichtung (10; 110) automatisch eine neue geplante Wiedergabezeit zuweist, die der neuen Position entspricht.

11. Vorrichtung (10; 110) nach Anspruch 10, wobei die Vorrichtung eine Touchscreen-Anzeige und -Eingabeschnittstelle hat, und die Neuplanung der Wiedergabezeit für mindestens eine der hörbaren Nachrichten unter Verwendung einer Drag-and-Drop-Funktion der Touchscreen-Vorrichtung bewerkstelligt wird.

12. Vorrichtung (10; 110) nach einem der vorhergehenden Ansprüche, wobei die Vorrichtung angepasst ist, um die hörbaren Nachrichten in Bezug auf die Reihe der Bedienelemente (1 bis 11) abhängig von dem Zeitpunkt zu ordnen, an dem die hörbaren Nachrichten erstellt wurden.

13. Computerprogramm, gespeichert auf einem computerlesbaren Träger, wobei das Computerprogramm angepasst ist, um auf eine elektronische Vorrichtung (10; 110) geladen zu werden, die Mittel zum Aufzeichnen und Speichern einer Mehrzahl von hörbaren Nachrichten, die durch den Benutzer erstellt wurden, und eine Reihe von Bedienelementen (1 bis 11) aufweist,
wobei das Computerprogramm auf der Vorrichtung betriebsfähig ist, um jede der hörbaren Nachrichten einem Bedienelement in der Reihe von Bedienelementen (1 bis 11) zuzuweisen, wobei die Bedienelemente unabhängig voneinander von dem Benutzer betätigbar sind, und
wobei das Computerprogramm auf der Vorrichtung betriebsfähig ist, sodass jede der hörbaren Nachrichten durch Betätigung des Bedienelements abspielbar ist, dem sie zugeordnet ist, und die Reihe von Bedienelementen (1 bis 11) in einer geordneten Abfolge angeordnet ist, wobei die Reihenfolge für den Benutzer durch die physische Anordnung der Bedienelemente und die den Bedienelementen zugehörigen visuellen Anzeigen identifizierbar ist,
**dadurch gekennzeichnet, dass** den hörbaren Nachrichten geplante Wiedergabezeiten zugewiesen sind, und das Computerprogramm auf der Vorrichtung betriebsfähig ist, um jede der hörbaren Nachrichten ihrem Bedienelement auf Grundlage von einer oder mehreren Regeln zuzuweisen, sodass die hörbaren Nachrichten in Bezug auf die geordnete Abfolge der Reihe von Bedienelementen (1 bis 11) in einer Reihenfolge der geplanten Wiedergabezeiten geordnet werden,
wobei das Computerprogramm angepasst ist, um die hörbaren Nachrichten zu den entsprechenden geplanten Wiedergabezeiten abzuspielen.

## Revendications

1. Dispositif (10; 110) pour assister la mémoire d'un utilisateur, ledit dispositif comprenant une série d'actionneurs (1-11) actionnables indépendamment par ledit utilisateur, et
un dispositif d'enregistrement et de stockage d'une pluralité de messages audibles créés par ledit utilisateur et d'affectation de chacun desdits messages audibles à un desdits actionneurs (1-11).
chacun desdits messages audibles étant lisible par l'actionnement de l'actionneur auquel il a été affecté, et
la série desdits actionneurs (1-11) étant agencée dans une séquence ordonnée, l'ordre étant identifiable, pour l'utilisateur, d'après l'agencement physique desdits actionneurs et indications visuelles correspondant auxdits actionneurs, et
**caractérisé en ce que**
ledit dispositif (10; 110) comprend en outre un dispositif d'affectation des heures de lecture programmées auxdits messages audibles, et
ledit dispositif (10; 110) est adapté pour affecter chacun desdits messages audibles à son actionneur sur la base d'une ou plusieurs règles, de sorte que lesdits messages audibles soient ordonnés relativement à ladite séquence ordonnée de la série desdits actionneurs (1-11) dans un ordre correspondant auxdites heures de lecture programmées, ledit dispositif (10; 110) étant adapté pour la lecture des messages audibles aux heures de lecture programmées correspondantes.

2. Dispositif (10; 110) selon la revendication 1, chaque message audible étant distinct des autres messages audibles stockés dans le dispositif, de sorte que lesdits messages audibles puissent être réordonnés en cours d'usage.

3. Dispositif (10; 110) selon la revendication 1 ou 2, ledit dispositif (10; 110) étant adapté pour affecter des messages audibles à la série desdits actionneurs (1-11), de sorte que les messages audibles soient affectés en séquence d'un bout de l'ordre identifiable par l'utilisateur desdits actionneurs (1-11), par exemple depuis le début d'une séquence numérique ou alphabétique correspondant auxdits actionneurs.

4. Dispositif (10; 110) selon une quelconque des revendications précédentes, la séquence desdits actionneurs (1-11) auxquels les messages audibles sont affectés étant une séquence continue desdits actionneurs (1-11) à un bout de l'ordre identifiable par l'utilisateur desdits actionneurs (1-11), les actionneurs restants auxquels un message audible n'a pas été affecté constituant une autre séquence continue d'actionneurs à l'autre bout de l'ordre identifiable par l'utilisateur desdits actionneurs (1-11).

5. Dispositif (10; 110) selon une quelconque des revendications précédentes, ledit dispositif étant adapté pour ordonner les messages audibles en fonction d'une indication de priorité affectée par ledit utilisateur.

6. Dispositif (10; 110) selon une quelconque des revendications précédentes, ledit dispositif (10; 110) fournissant, à l'utilisateur, une indication d'après laquelle la lecture a lieu à l'heure de lecture programmée.

7. Dispositif (10; 110) selon une quelconque des revendications précédentes, ledit dispositif étant adapté pour répéter le message audible à la suite d'une lecture initiale à l'heure de lecture programmée, jusqu'à ce que ledit utilisateur indique que le message audible peut être supprimé, par exemple parce que la tâche correspondante a été exécutée, ou ledit utilisateur reprogramme l'heure de lecture pour ce message audible.

8. Dispositif (10; 110) selon la revendication 7, comprenant une fonction de mise en sourdine dudit dispositif, ledit dispositif (10; 110) recommençant la lecture répétée du message audible lorsque la mise en sourdine a été supprimée, jusqu'à ce que ledit utilisateur indique que le message audible peut être supprimé ou ledit utilisateur reprogramme l'heure de lecture pour ce message audible.

9. Dispositif (10; 110) selon une quelconque des revendications précédentes, ledit dispositif étant adapté pour la lecture de messages audibles à une ou plusieurs heures avant l'heure de lecture programmée, dans le cadre d'un système de rappel.

10. Dispositif (10; 110) selon une quelconque des revendications précédentes, ledit dispositif permettant audit utilisateur de reprogrammer l'heure de lecture pour un message audible, le dispositif étant adapté pour permettre audit utilisateur d'indiquer la nouvelle position désirée du message audible relativement à la série desdits actionneurs (1-11), de sorte que le dispositif (10; 110) affecte automatiquement une nouvelle heure de lecture programmée appropriée à la nouvelle position.

11. Dispositif (10; 110) selon la revendication 10, ledit dispositif possédant un écran d'affichage tactile et une interface d'entrée, et la reprogrammation de l'heure de lecture pour au moins un desdits messages audibles s'effectuant à l'aide d'une fonction « glisser-déposer » du dispositif à écran d'affichage tactile.

12. Dispositif (10; 110) selon une quelconque des revendications précédentes, ledit dispositif étant adapté pour ordonner lesdits messages audibles relativement à la série desdits actionneurs (1-11) en fonction de l'heure à laquelle lesdits messages audibles ont été créés.

13. Programme informatique placé dans un support lisible par ordinateur, le programme informatique étant adapté pour être chargé sur un dispositif électronique (10; 110) comprenant un dispositif d'enregistrement et de stockage d'une pluralité de messages audibles créés par ledit utilisateur et une série d'actionneurs (1 -11),
le programme informatique étant opérationnel, sur ledit dispositif, pour affecter chacun desdits messages audibles à un actionneur dans ladite série d'actionneurs (1-11), lesdits actionneurs étant actionnables indépendamment par ledit utilisateur, et
le programme informatique étant opérationnel, sur ledit dispositif, de sorte que chacun desdits messages audibles puisse être lu par l'actionnement de l'actionneur auquel il a été affecté, et ladite série d'actionneurs (1-11) étant agencée dans une séquence ordonnée, l'ordre étant identifiable, pour ledit utilisateur, par l'agencement physique desdits actionneurs et des indications visuelles associées auxdits actionneurs,
**caractérisé en ce qu'**auxdits messages audibles sont affectées des heures de lecture programmées, et que le programme informatique est opérationnel sur ledit dispositif pour affecter chacun des messages audibles à son actionneur sur la base d'une ou plusieurs règles de sorte que lesdits messages audibles soient ordonnés relativement à ladite séquence ordonnée de ladite série d'actionneurs (1-11) dans un ordre desdites heures de lecture programmées,
ledit programme informatique étant adapté pour lire les messages audibles aux heures de lecture programmées correspondantes.
